Europäisches Patentamt

European Patent Office

Office européen des brevets

(19)

(11) Veröffentlichungsnummer : **0 167 481**
**B1**

(12) **EUROPÄISCHE PATENTSCHRIFT**

(45) Veröffentlichungstag der Patentschrift :
15.06.88

(51) Int. Cl.⁴ : **F 16 B 13/00**

(21) Anmeldenummer : 85810167.8

(22) Anmeldetag : 15.04.85

(54) Vorspannbarer Dübel.

(30) Priorität : 09.05.84 DE 3417173

(43) Veröffentlichungstag der Anmeldung :
08.01.86 Patentblatt 86/02

(45) Bekanntmachung des Hinweises auf die Patenterteilung : 15.06.88 Patentblatt 88/24

(84) Benannte Vertragsstaaten :
CH DE FR LI SE

(56) Entgegenhaltungen :
EP-A- 0 005 969
EP-A- 0 098 575
WO-A-84 /037 41
AT-B-   295 814
AT-B-   337 959
AT-B-   353 456
DE-A- 2 632 605
DE-A- 3 142 432
DE-B- 2 249 762
DE-B- 2 350 298

(73) Patentinhaber : HILTI Aktiengesellschaft

FL-9494 Schaan (LI)

(72) Erfinder : Vollmer, Helmut, Dipl.-Ing.
Wingerta 665
FL-9496 Balzers (LI)
Erfinder : Kousek, Heinz, Dr. Phys.
Rappenwaldstrasse 11
A-6700 Feldkirch (AT)
Erfinder : Maier, Elmar
Letzebühelweg 10
A-6807 Tisis (AT)

(74) Vertreter : Wildi, Roland
Hilti Aktiengesellschaft Patentabteilung
FL-9494 Schaan (LI)

## Beschreibung

Die Erfindung betrifft einen Dübel, welcher unter axialer Vorspannung in einem Aufnahmematerial, wie Beton, Mauerwerk und dergleichen, verankerbar ist, bei dem, gegebenenfalls unter Zwischenlage eines zu befestigenden Bauteils, ein Widerlager gegen das Aufnahmematerial bzw. das zu befestigende Bauteil gespannt wird.

Dübel für höhere Beanspruchung sowie Wechselbelastung werden meist nach der Verankerung im Aufnahmematerial in axialer Richtung vorgespannt. Dieses Vorspannen ist weitgehend unabhängig davon, ob die Verankerung des Dübels im Aufnahmematerial durch einen Spreizvorgang, durch formschlüssigen Eingriff oder beispielsweise durch adhäsive Verbindung (z. B. Kleben) erfolgt.

Dieses Vorspannen ist insbesondere dann von grosser Bedeutung, wenn starke dynamische Kräfte über eine Anschlusskonstruktion auf die Dübel einwirken, wenn zur Aufnahme von Querkräften die zwischen dem Aufnahmematerial und der Anschlusskonstruktion auftretende Haftreibung mitbenutzt werden soll oder wenn Konsolen mit langen Auslegern befestigt werden sollen.

Untersuchungen haben gezeigt, dass die nach dem Setzen des Dübels aufgebrachte Vorspannung innerhalb kurzer Zeit um einen wesentlichen Teil reduziert wird. Diese Reduktion der Vorspannung, die auf ein « Fliessen » bzw Relaxieren des Aufnahmematerials zurückzuführen ist, kann 30 - 80 % der ursprünglich aufgebrachten Vorspannung betragen. Die Reduktion setzt unmittelbar nach dem Aufbringen der Vorspannung ein, beträgt nach etwa 2 Stunden ca 25 % und erreicht nach etwa 7 Tagen rund 35 %. Eine Erhöhung der Vorspannung (beispielsweise um rund 50 % über die vorgesehene Gebrauchslast hinaus) kann jedoch nicht verhindern, dass die Vorspannung nach kurzer Zeit wieder unter die empfohlene Gebrauchslast abfällt und die erwünschte Vorspannung somit nicht mehr sichergestellt ist. Durch das Vorspannen des Dübels auf ein Mehrfaches der empfohlenen Gebrauchslast kann lediglich der Zeitpunkt des Absinkens der Vorspannung unter die Gebrauchslast hinausgeschoben werden. Durch Ueberbelastung beim Vorspannen des Dübels wird ausserdem die Festigkeit des Aufnahmematerials überschritten, was zu sofortigen oder späteren Schäden führen kann.

Eine bisher teilweise praktizierte Methode zur Vermeidung dieser nachteiligen Erscheinung besteht darin, den Dübel nach dem Absinken der Vorspannung um einen bestimmten Wert nachzuspannen. Dieses Nachspannen ist jedoch sehr zeit- und daher auch kostenaufwendig und lässt sich relativ schlecht kontrollieren. Ausserdem ist die Zugänglichkeit der Befestigung nach erfolgter Montage oft sehr eingeschränkt. Auch diese Methode hat jedoch nur aufschiebende Wirkung.

Ferner ist der DE-A-3 142 432 ein Spreizdübel bekannt, bei dem zwischen dem Widerlager und dem Aufnahmematerial bzw dem zu befestigenden Bauteil Federelemente angeordnet sind, deren maximale Spannkraft den Betrag der zulässigen Gebrauchslast des Dübels übersteigt. Solche Federelemente sind aufwendig und voluminös. Ausserdem kann ihre Funktionsfähigkeit bereits beim Setzvorgang oder durch Korrosion teilweise oder vollständig beeinträchtigt werden. Die Dimensionierung und Zuordnung der Federelemente ist nicht unproblematisch. Da für die erforderliche Federkennlinie oft mehrere Federelemente notwendig sind, besteht die Möglichkeit, dass bei der Montage des Dübels ein Teil der Federelemente verlorengeht oder falsch montiert wird, so dass die gewünschte Federcharakteristik nicht erreicht wird.

Der Erfindung liegt die Aufgabe zugrunde, einen bekannten Dübel derart zu verbessern, dass eine sich auf die Verankerung schädlich auswirkende Reduktion der Vorspannung mit einfachen Mitteln in wirtschaftlicher Weise zuverlässig kompensiert wird.

Erfindungsgemäss wird diese Aufgabe dadurch gelöst, dass zwischen dem Widerlager und dem Aufnahmematerial bzw dem zu befestigenden Bauteil ein sich entlang der Dübellängsachse ausdehnbarer, dosenartiger Behälter angeordnet ist, welcher in seinem Aufnahmeraum eine quellfähige, hydraulische Masse enthält.

Hydraulische Massen von einer bestimmten Zusammensetzung haben die Eigenschaft, beim Abbinden aufzuquellen, dh ihr Volumen zu vergrössern. Wird dieser Volumensvergrösserung von aussen entgegengewirkt, so können im Innern der Masse erhebliche Drücke entstehen. Diese Erscheinung wird beispielsweise beim nichtexplosiven Sprengen ausgenutzt. Da sich der dosenartige Behälter aufgrund seiner konstruktiven Auslegung hauptsächlich entlang der Dübellängsachse ausdehnen kann, ist ein Ausgleich der durch das « Fliessen » des Aufnahmematerials entstehenden Längenänderung möglich. Die im Dübel aufgebrachte Vorspannung bleibt somit im wesentlichen erhalten.

An sich ist es möglich, die Masse in einer beispielsweise durch Schweissen oder Löten allseitig verschlossenen Dose anzuordnen. Die sich in Richtung der Längsachse erstreckenden Wände einer solchen Dose müssen dabei jedoch in axialer Richtung dehnbar sein. Dies wäre beispielsweise durch eine faltenbalgartige Ausbildung des Behälters möglich. Eine faltenbalgartige Ausbildung des Behälters kann jedoch sehr aufwendig und kostspielig sein. Für eine einfache Ausbildung und Handhabung des Behälters ist es vorteilhaft, wenn der Behälter aus einem Bodenteil und einem Deckelteil besteht, wobei wenigstens in einem der beiden Teile wenigstens ein Teil des Aufnahmeraumes angeordnet ist. Bei einem solchen Behälter ist es beispielsweise möglich, die hydraulische Masse erst unmittelbar vor der Anwendung in den Aufnahmeraum einzufüllen und diesen durch Zusammenfügen der beiden Teile zu verschliessen. Durch den beim Aufquellen der Masse erfolgenden Druckaufbau können das Bodenteil und das Deckelteil axial auseinandergeschoben werden und somit zum Ausgleich des im Aufnahmematerial auftretenden Entspannungsvorganges dienen.

Der sich beim Aufquellen der Masse im Behälter entwickelnde Druck wirkt allseitig auf die Wandungen des Aufnahmeraumes. Für die Kompensation des Vorspannungsverlustes ist jedoch nur die in Richtung der Dübellängsachse wirkende Kraftkomponente nützlich. Durch den quer zur Längsachse wirkenden Druck können dagegen Reibkräfte entstehen, welche ein axiales Ausdehnen des Behälters behindern. Um dies zu vermeiden, ist es vorteilhaft, wenn der Aufnahmeraum in wenigstens einem der beiden Teile einen sich zum andern Teil hin erweiternden Querschnitt aufweist. Durch den sich zum andern Teil hin erweiternden Querschnitt des Aufnahmeraumes wird die freie Ausdehnung der Masse in axialer Richtung ermöglicht.

Die Wandung des Aufnahmeraumes mit sich zum andern Teil hin erweiterndem Querschnitt können im Prinzip beliebig, beispielsweise als Hohlkehle, ausgebildet werden. Für eine einfache Herstellung ist es jedoch zweckmässig, wenn die Wandungen des sich erweiternden Aufnahmeraumes V-förmig verlaufen. V-förmig verlaufende Wandungen benötigen zur Herstellung keine Spezialwerkzeuge und -maschinen.

Die V-förmig verlaufenden Wandungen des Aufnahmeraumes werden vorteilhaft so angeordnet, dass sie einen Winkel von 60° bis 120°, vorzugsweise von 70° bis 110°, einschliessen. Innerhalb dieses Bereiches ist gewährleistet, dass auch die Ausdehnung der Masse in radialer Richtung die beiden Behälterteile in axialer Richtung auseinander treibt und somit diese Bewegung ebenfalls zur Kompensation beiträgt.

Für eine gleichmässige Verteilung der Kräfte ist eine symmetrische Anordnung des Aufnahmeraumes für die quellfähige, hydraulische Masse erforderlich. Dies kann beispielsweise durch mehrere Bohrungen oder Ansenkungen erfolgen. Für eine kompakte Bauweise ist es jedoch zweckmässig, den Aufnahmeraum für die quellfähige, hydraulische Masse ringförmig auszubilden. Ein ringförmiger Aufnahmeraum vereinfacht das Einfüllen der Masse und ermöglicht eine gleichmässige Flüssigkeitsaufnahme.

Beim Vorspannen des Dübels wird neben der Masse auch der Behälter selbst den dabei erzeugten Druckkräften ausgesetzt. Um dabei eine kontrollierte elastische Verformung des Behälters zu ermöglichen, ist es vorteilhaft, dass zur Bildung eines den Aufnahmeraum umgebenden Ringspaltes an wenigstens einem der beiden Teile die Höhe auf der einen Seite des ringförmigen Aufnahmeraumes gegenüber der Höhe auf der andern Seite geringer ist. Die Teile des Behälters wirken somit wie vorspannbare Tellerfedern. Der Ringspalt ermöglicht ausserdem den Eintritt der für das Aufquellen der Masse erforderlichen Flüssigkeit.

Die quellfähige, hydraulische Masse wird nach dem Abbinden so zäh-viskos, dass sie nicht mehr wegfliessen kann. Aus optischen Gründen sowie um die Masse vor Umwelteinflüssen zu schützen, ist es vorteilhaft, wenn die beiden Teile des Behälters teleskopisch ineinanderschiebbare Wandbereiche aufweisen. Spezielle Mittel zur Abdichtung sowie eine hohe Passgenauigkeit sind dabei nicht erforderlich.

Die Masse kann ausserhalb des Behälters, beispielsweise in einem Mischgerät, mit den für das Abbinden erforderlichen Stoffen zusammengebracht und vermischt werden. Dies ist jedoch aufwendig und erfordert Fachkenntnisse des Montagepersonals. Wesentlich einfacher ist es, die Masse bereits vom Hersteller in den Behälter einzufüllen. Da es sich bei den Massen meist um mineralische, durch Beifügen von Flüssigkeit, insbesondere Wasser, abbindende Stoffe handelt, ist es zweckmässig, dass der Behälter dem Durchtritt einer Reaktionsflüssigkeit dienende Oeffnungen oder Spalte aufweist. Der die trockene Masse enthaltende Behälter kann somit problemlos gelagert und vor der Anwendung kurz in die entsprechende Reaktionsflüssigkeit eingetaucht werden, so dass diese durch die Oeffnungen ins Innere des Behälters dringt und den Abbindevorgang einleitet. Ein vorzeitiges Eindringen von Feuchtigkeit kann durch eine entsprechende Verpackung des Behälters verhindert werden.

Eine weitere mögliche Ausführung besteht darin, dass die Trockenmasse und die für das Abbinden erforderliche Flüssigkeit voneinander getrennt in zerstörbaren Hüllen im Boden- bzw Deckelteil des Behälters angeordnet sind. Bei der Anwendung werden die beiden Teile zusammengesteckt und die Hüllen dabei beispielsweise durch vorstehende Zähne gegenseitig zerstört. Durch Verdrehen der beiden Teile relativ zueinander können die Komponenten miteinander vermischt und der Abbindevorgang eingeleitet werden.

Anstelle einer die Gesamtmenge enthaltenden Hülle kann die Flüssigkeit auch in Teilmengen zerlegt und beispielsweise in Mikrokapseln angeordnet werden, welche durch äussere Druckeinwirkung zerstört werden.

Für die Zusammensetzung der quellfähigen, hydraulischen Masse bestehen eine Vielzahl von Möglichkeiten. In praktischen Versuchen hat es sich als vorteilhaft erwiesen, dass die Masse

22 - 85 Gew.-% aufquellende Bestandteile
12 - 76 Gew.-% hydraulische Bindemittel
0 - 2 Gew.-% Additive
0 - 10 Gew.-% Füllstoffe

enthält.

Als aufquellende Bestandteile eignet sich vorzugsweise gebrannter Kalk (CaO). Daneben kommen jedoch auch Magnesiumoxid (MgO), Gips, Aluminiumoxid ($Al_2O_3$) oder dergleichen Stoffe in Frage. Die Additive können Quellverzögerer, Schnellabbinder, Verflüssiger usw sein. Als Füllmittel kann beispielsweise Quarzsand verwendet werden.

Die Erfindung soll nachstehend anhand der sie beispielsweise wiedergebenden Zeichnung näher erläutert werden. Es zeigen :

Fig. 1 einen Spreizdübel mit erfindungsgemässem Behälter, in vorgespanntem Zustand,

Fig. 2 den Dübel gemäss Fig. 1 nach teilweisem Entspannen bzw Relaxieren des Aufnahmematerials,

Fig. 3 einen zeitlichen Verlauf der Vorspannung in einem Dübel, mit und ohne Ausgleichselement,

Fig. 4 eine weitere Ausführung eines erfindungsgemässen Behälters, im Längsschnitt,

Fig. 5 einen Querschnitt durch den in Fig. 4 dargestellten Behälter, entlang der Linie V-V,

Fig. 6 eine weitere Ausführung eines erfindungsgemässen Behälters, im Längsschnitt,

Fig. 7 eine weitere Ausführungsform eines erfindungsgemässen Behälters, im Längsschnitt,

Fig. 8 eine weitere Ausführungsform eines erfindungsgemässen Behälters, im Längsschnitt,

Fig. 9 einen Querschnitt durch den in Fig. 8 dargestellten Behälter, entlang der Linie IX-IX.

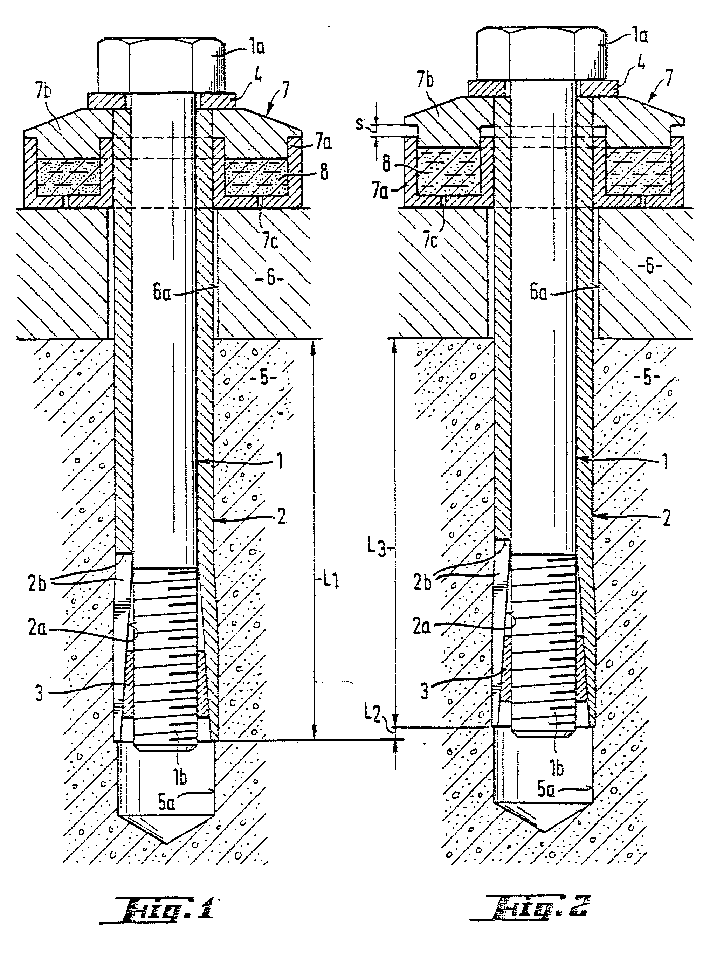

Der aus den Figuren 1 und 2 ersichtliche Dübel besteht aus einem insgesamt mit 1 bezeichneten Ankerbolzen, der an seinem rückwärtigen Ende ein durch einen Sechskantkopf 1a gebildetes Widerlager aufweist und an seinem vorderen Ende mit einem Gewinde 1b versehen ist. Der Ankerbolzen 1 wird von einer insgesamt mit 2 bezeichneten Dübelhülse umgeben. Die Dübelhülse 2 weist eine sich zum vorderen Ende hin erweiternde Innenbohrung 2a auf, in welche ein Spreizkörper 3 eingesetzt ist. Zur Aufweitbarkeit der Dübelhülse 2 ist diese mit vom vorderen Ende ausgehenden Längsschlitzen 2b versehen. Eine Unterlagsscheibe 4 stützt sich am Sechskantkopf 1a ab. Die Dübelhülse 2 ist in ein Bohrloch 5a eines insgesamt mit 5 bezeichneten Aufnahmematerials eingesetzt. Der Dübel dient der Befestigung eines insgesamt mit 6 bezeichneten Bauteils. Das Bauteil 6 weist zu diesem Zweck eine Durchgangsbohrung 6a auf, welche den Aussendurchmesser der Dübelhülse 2 etwas übersteigt. Zwischen der Unterlagsscheibe 4 und dem Bauteil 6 ist ein insgesamt mit 7 bezeichneter, dosenartiger Behälter angeordnet. Der Behälter besteht aus einem Bodenteil 7a und einem Deckelteil 7b, welche teleskopisch ineinander verschiebbare Wandbereiche aufweisen. Im Behälter 7 ist eine quellfähige, hydraulische Masse 8 angeordnet. Das Bodenteil 7a ist mit dem Durchtritt einer Reaktionsflüssigkeit dienenden Oeffnungen 7c versehen.

Vor der Verwendung des Behälters 7 wird dieser beispielsweise in eine Reaktionsflüssigkeit eingetaucht, welche durch die Oeffnungen 7c in die Masse 8 eindringt und von dieser aufgenommen wird.

Dieser Vorgang dauert meist nur einige Minuten. Anschliessend wird der Behälter 7 auf die Dübelhülse 2 aufgesteckt und der Dübel durch das zu befestigende Bauteil 6 hindurch in das Bohrloch 5a des Aufnahmematerials 5 eingeführt. Der Dübel wird nun durch Aufbringen eines entsprechenden Drehmomentes am Sechskantkopf 1a auf den gewünschten Wert vorgespannt. Die sich im Bereich des Aufnahmematerials 5 befindende Einspannlänge ist in Fig. 1 mit $L_1$ bezeichnet. Durch das anschliessend beginnende Entspannen des Aufnahmematerials 5 wird nun die Einspannlänge $L_1$ um das Mass $L_2$ auf $L_3$ verkürzt. Diese Längenänderung $L_2$ ist in Fig. 2 etwas übertrieben dargestellt. Bei herkömmlichen Dübelverbindungen würde die Einspannlänge des Ankerbolzens 1 etwa um das Mass $L_2$ verkürzt und die Vorspannung des Ankerbolzens 1 entsprechend reduziert. Durch das Aufquellen der Masse 8 im Behälter 7 werden das Deckelteil 7b und das Bodenteil 7a um das Mass s auseinandergeschoben und die Vorspannung im Ankerbolzen 1 somit weitgehend aufrechterhalten. Der Verschiebeweg s des Deckelteils 7d gegenüber dem Bodenteil 7a entspricht im Idealfall der Länge $L_2$.

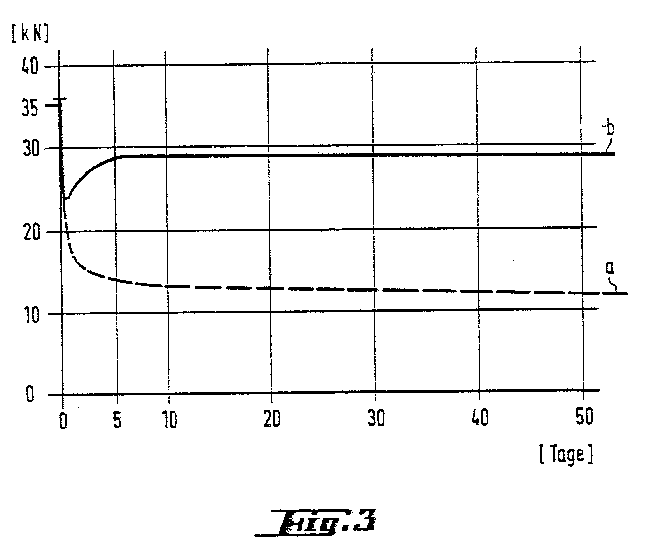

Fig. 3 zeigt den zeitlichen Verlauf der Vorspannung bei einem sogenannten « Schwerlastanker » der Grösse M16. Dieser entspricht etwa der in den Fig. 1 und 2 dargestellten Ausführung und besteht im wesentlichen aus einer teilweise längsgeschlitzten Metallhülse und einem mittels eines Schraubenbolzens in die Hülse einziehbaren Spreizkörper. Der Dübel wurde einmal mit und einmal ohne erfindungsgemässes Ausgleichselement in Beton auf 36 kN vorgespannt. In beiden Fällen sank die Vorspannung nach kurzer Zeit, dh nach ca. einem Tag, stark ab. Während die Vorspannung beim Dübel ohne Ausgleichselement (Kurve a) noch weiter abfiel bis unter 50 % der ursprünglich aufgebrachten Vorspannung, stieg die Vorspannung beim Dübel mit Ausgleichselement (Kurve b) wieder an und erreichte nach 7 Tagen etwa 80 % der ursprünglich aufgebrachten Vorspannung. Wie aus den Kurven weiter ersichtlich ist, bleiben diese Werte nach ca. 10 Tagen auch längerfristig weitgehend stabil.

Die Fig. 4 bis 9 zeigen Dübelverbindungen mit insgesamt mit 11 bezeichneten, einen Sechskantkopf 11a aufweisenden Ankerbolzen und Dübelhülsen 12. Zwischen dem Sechskantkopf 11a und einem zu befestigenden Bauteil 16 ist eine U-Scheibe 14 sowie in den Fig. 4 bis 6 und 8 zusätzlich eine Deckscheibe 19 angeordnet.

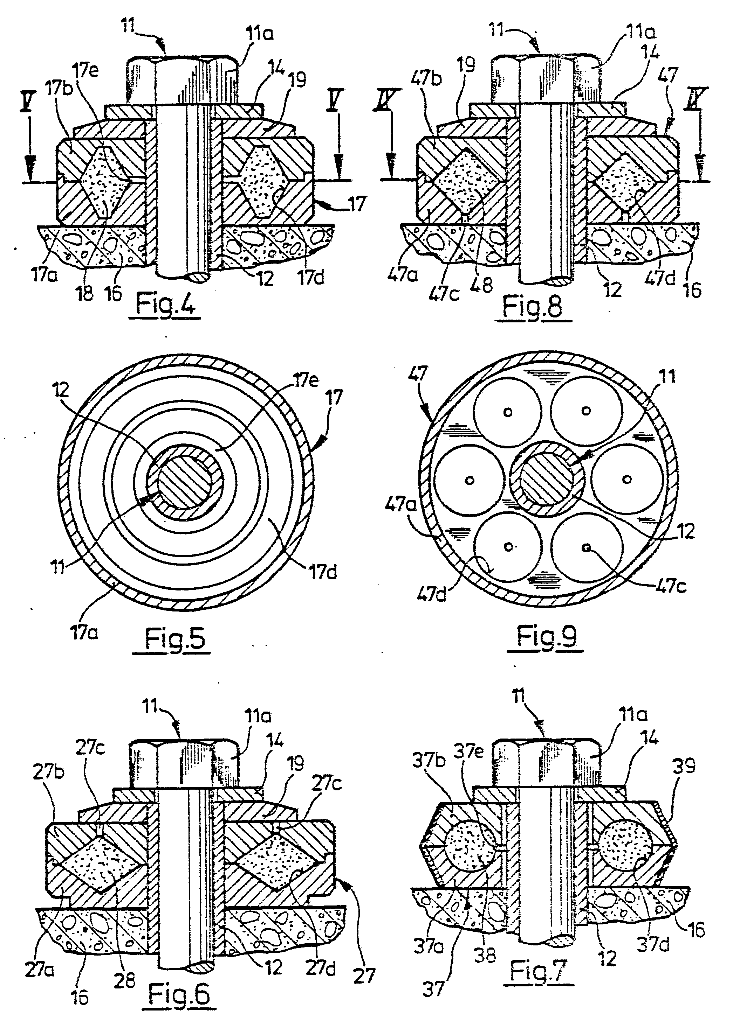

Der aus Fig. 4 und 5 ersichtliche, insgesamt mit 17 bezeichnete Behälter besteht aus einem Bodenteil 17a und einem Deckelteil 17b. Die beiden Teile 17a, 17b bilden zusammen einen ringförmigen Aufnahmeraum 17d für eine quellfähige, hydraulische Masse 18. Das Bodenteil 17a und das Deckelteil 17b weisen teleskopisch ineinander verschiebbare Wandbereiche auf. Auf der Innenseite des Aufnahmeraumes 17d bilden die beiden Teile 17a, 17b einen Ringspalt 17e. Der Ringspalt 17e dient einerseits dazu, die für das Aufquellen der Masse 18 erforderliche Flüssigkeit in den Behälter 17 eintreten zu lassen. Andererseits ermöglicht der Ringspalt 17e eine elastische Verformung des Behälters 17 beim Vorspannen der Verbindung. Der Behälter 17 selbst bildet somit eine Art Feder. Der etwa je zur Hälfte im Bodenteil 17a und im Deckelteil 17b angeordnete Aufnahmeraum 17d weist einen sich zum andern Teil hin erweiternden Querschnitt mit V-förmig verlaufenden Wandungen auf. Die Wandungen schliessen einen spitzen Winkel von ca. 70° ein. Durch diese Ausbildung des Aufnahmeraumes 17d werden ein Verspannen der Masse 18 im Behälter und somit zusätzliche Kraftverluste infolge Reibung verhindert. Dadurch kann — bei gleicher Druckkraft — der Aussendurchmesser gegenüber der in Fig. 1 und 2 dargestellten Ausführungsform kleiner dimensioniert werden.

Der aus Fig. 6 ersichtliche, insgesamt mit 27 bezeichnete Behälter entspricht im wesentlichen der in Fig. 4 und 5 dargestellten Ausführung. Der Behälter 27 besteht aus einem Bodenteil 27a und einem Deckelteil 27b. Anstelle eines Ringspaltes ist das Deckelteil 27b mit dem Eintritt von Flüssigkeit dienenden Oeffnungen 27c versehen. Der Behälter 27 weist ebenfalls einen ringförmigen Aufnahmeraum 27d für eine Masse 25 auf. Die V-förmig verlaufenden Wandungen des Aufnahmeraumes 27d schliessen einen stumpfen Winkel von ca. 110° ein. Eine solche Ausbildung des Aufnahmeraumes 27d ergibt bei gleichem Volumen der Masse 28 wie in Fig. 4 eine grössere Projektionsfläche in Achsrichtung und somit theoretisch auch höhere Kräfte. Die den Aufnahmeraum 27d umgebenden Wandteile sind ebenfalls teleskopisch ineinanderschiebbar.

Fig. 7 zeigt einen insgesamt mit 37 bezeichneten, aus einem Bodenteil 37a und einem Deckelteil 37b bestehenden Behälter. Die beiden Teile 37a und 37b sind gleich ausgebildet und symmetrisch zueinander angeordnet und werden durch eine Umhüllung 39 zusammengehalten. Die Umhüllung 39 ist beispielsweise als Schrumpfschlauch ausgebildet. Der Aufnahmeraum 37d für eine Masse 38 weist einen kreisförmigen Querschnitt auf. Zwischen dem Bodenteil 37a und dem Deckelteil 37b befindet sich auf der Innenseite des Aufnahmeraumes 37d ein Ringspalt 37e. Dieser Ringspalt 37e hat dieselben Funktionen wie derjenige in Fig. 4 und 5 und kann beispielsweise mittels eines wasserdurchlässigen Faser-Vlies teilweise verschlossen werden.

Der aus Fig. 8 und 9 ersichtliche, insgesamt mit 47 bezeichnete Behälter besteht aus einem Bodenteil 47a und einem Deckelteil 47b. Beide Teile 47a und 47b weisen etwa je zur Hälfte Aufnahmeräume 47d für eine Masse 48 auf. Die Aufnahmeräume 47d sind als über den Umfang verteilt angeordnete, kegelige Ansenkungen mit einem Spitzenwinkel von ca. 90° ausgebildet. Das Bodenteil 47a ist mit in die Aufnahmeräume 47d mündenden Oeffnungen 47c versehen, welche dem Zutritt von Flüssigkeit zur Masse 48 dienen. Die die Aufnahmeräume 47d umgebenden Wandteile sind ebenfalls teleskopisch ineinander verschiebbar.

## Patentansprüche

1. Dübel, welcher unter axialer Vorspannung in einem Aufnahmematerial, wie Beton, Mauerwerk und dgl. verankerbar ist, bei dem, gegebenenfalls unter Zwischenlage eines zu befestigenden Bauteils, ein Widerlager gegen das Aufnahmematerial bzw das zu befestigende Bauteil gespannt wird, dadurch gekennzeichnet, dass — zum Ausgleich von Setzerscheinungen — zwischen dem Widerlager (1a, 11a) und dem Aufnahmematerial (5) bzw dem zu befestigenden Bauteil (6, 16) ein sich entlang der Dübellängsachse ausdehnbarer, dosenartiger Behälter (7, 17, 27, 37, 47) angeordnet ist, welcher in seinem Aufnahmeraum (17d, 27d, 37d, 47d) eine quellfähige, hydraulische Masse (8, 18, 28, 38) enthält.

2. Dübel nach Anspruch 1, dadurch gekennzeichnet, dass der Behälter (7, 17, 27, 37, 47) aus einem Bodenteil (7a, 17a, 27a, 37a, 47a) und einem Deckelteil (7b, 17b, 27b, 37b, 47b) besteht, wobei wenigstens in einem der beiden Teile wenigstens ein Teil des Aufnahmeraumes (17d, 27d, 37d, 47d) angeordnet ist.

3. Dübel nach Anspruch 2, dadurch gekennzeichnet, dass der Aufnahmeraum (17d, 27d, 37d, 47d) in wenigstens einem der beiden Teile einen sich zum andern Teil hin erweiternden Querschnitt aufweist.

4. Dübel nach Anspruch 3, dadurch gekennzeichnet, dass die Wandungen des sich erweiternden Aufnahmeraumes (17d, 27d, 37d, 47d) V-förmi verlaufen.

5. Dübel nach Anspruch 4, dadurch gekennzeichnet, dass die V-förmig verlaufenden Wandungen des Aufnahmeraumes (17d, 27d, 37d, 47d) einen Winkel von 60° bis 120°, vorzugsweise von 70° bis 110°, einschliessen.

6. Dübel nach einem der Ansprüche 2 bis 5, dadurch gekennzeichnet, dass der Aufnahmeraum (17d, 27d, 37d) für die quellfähige, hydraulische Masse ringförmig ausgebildet ist.

7. Dübel nach Anspruch 6, dadurch gekennzeichnet, dass zur Bildung eines den Aufnahmeraum umgebenden Ringspaltes (17e, 37e) an wenigstens einem der beiden Teile (17a, 17b, 37a, 37b) die Höhe auf der einen Seite des ringförmigen Aufnahmeraumes (17d, 37d) gegenüber der Höhe auf der andern Seite geringer ist.

8. Dübel nach einem der Ansprüche 2 bis 6, dadurch gekennzeichnet, dass die beiden Teile des Behälters (7, 17, 27, 47) teleskopisch ineinander verschiebbare Wandbereiche aufweisen.

9. Dübel nach einem der Ansprüche 1 bis 8, dadurch gekennzeichnet, dass der Behälter (7, 27, 47) dem Durchtritt einer Reaktionsflüssigkeit dienende Oeffnungen (7c, 27c, 47c) aufweist.

## Claims

1. Anchors or dowels which can be anchored under axial pretensioning in a receiving material, such as concrete, masonry and the like, with which an abutment, possibly with an intermediate structural component to be fastened, is tensioned against the receiving material, or the structural component to be fastened, characterized in that, for the compensation of setting phenomena, a tinlike container (7, 17, 27, 37, 47) enlargeable alonge the longitudinal anchor axis is positioned

between the abutment (1a, 11a) and the receiving material (5), or the structural component to be fastened (6, 16) which contains an swelling hydraulic substance (8, 18, 28, 38) in its holding chamber (17d, 27d, 37, 47d).

2. Anchors or dowels according to claim 1 characterized in that the container (7, 17, 27, 37, 47) consits of a bottom part (7a, 17a, 27a, 37a, 47a) and a top part (7b, 17b, 27b, 37b, 47b) where at least a portion of the holding chamber (17d, 27d, 37d, 47d) is located in at least one of the two parts.

3. Anchors or dowels according to claim 2 characterized in that the holding chamber (17d, 27d, 37d, 47d) in at least one of the two parts has a cross-section increasing in size towards the other part.

4. Anchors or dowels according to claim 3 characterized in that the walls of the holding chamber increasing in cross-section (17d, 27d, 37d, 47d) extend V-shaped.

5. Anchors or dowels according to claim 4 characterized in that the V-shaped walls of the holding chamber (17d, 27d, 37d, 47d) include an angle of 60 to 120 degrees but preferentially 70 to 110 degrees.

6. Anchors or dowels according to claims 2 to 5 characterized in that the holding chamber (17d, 27d, 37d) for the swelling hydraulic substance is annular shaped.

7. Anchors or dowels according to claim 6 characterized in that at least on one of the two parts (17a, 17b, 37a, 37b) the height on one side of the annular holding chamber (17d, 37d) is smaller compared to the height on the other side to form a circular space (17e, 37e) surrounding the holding chamber (17d, 37d).

8. Anchors or dowels according to claims 2 to 6 characterized in that the two parts of the container (7, 17, 27, 47) have wall sections which can be telescoped into each other.

9. Anchors or dowels according to claims 1 to 8 characterized in that the container (7, 27, 47) has holes (7c, 27c, 47c) serving the entry of a reaction liquid.

## Revendications

1. Cheville pouvant être ancrée sous précontrainte axiale dans un matériau de réception tel que du béton, de la maçonnerie et analogues, dans laquelle une butée est serrée, éventuellement avec interposition d'un élément à fixer, contre le matériau de réception et respectivement l'élément à fixer, caractérisée en ce que — pour compenser des phénomènes d'affaissement — entre la butée (1a, 11a) et le matériau de réception (5) et respectivement l'élément à fixer (6, 16) est disposé un récipient (7, 17, 27, 37, 47) en forme de boîte extensible le long de l'axe de la cheville dont le volume de réception (17d, 27d, 37d, 47d) contient une masse hydraulique gonflable (8, 18, 28, 38).

2. Cheville selon la revendication 1, caractérisée en ce que le récipient (7, 17, 27, 37, 47) se compose d'un élément de fond (7a, 17a, 27a, 37a, 47a) et d'un élément de couvercle (7b, 17b, 27b, 37b, 47b), au moins une partie du volume de réception (17d, 27d, 37d, 47d) étant disposée dans au moins l'un des deux éléments.

3. Cheville selon la revendication 2, caractérisée en ce que le volume de réception (17d, 27d, 37d, 47d) présente dans au moins l'un des deux éléments une section qui s'élargit en direction de l'autre élément.

4. Cheville selon la revendication 3, caractérisée en ce que les parois du volume de réception (17d, 27d, 37d, 47d) qui s'élargit sont disposées en V.

5. Cheville selon la revendication 4, caractérisée en ce que les parois disposées en V du volume de réception (17d, 27d, 37d, 47d) renferment un angle de 60° à 120°, de préférence de 70° à 110°.

6. Cheville selon l'une quelconque des revendications 2 à 5, caractérisée en ce que le volume de réception (17d, 27d, 37d) pour la masse hydraulique gonflable présente une forme annulaire.

7. Cheville selon la revendication 6, caractérisée en ce que, pour la formation d'une fente annulaire (17e, 37e) entourant le volume de réception, sur au moins l'un des deux éléments (17a, 17b, 37a, 37b) la hauteur sur l'un des côtés du volume de réception annulaire (17d, 37d) est plus faible par rapport à la hauteur sur l'autre côté.

8. Cheville selon l'une quelconque des revendications 2 à 6, caractérisée en ce que les deux éléments du récipient (7, 17, 27, 47) présentent des zones de paroi pouvant s'insérer de manière télescopique les unes dans les autres.

9. Cheville selon l'une quelconque des revendications 1 à 8, caractérisée en ce que le récipient (7, 27, 47) comporte des ouvertures (7c, 27c, 47c) destinées au passage d'un liquide réactionnel.

**Fig.1**

**Fig.2**

Fig.3

Fig.4

Fig.8

Fig.5

Fig.9

Fig.6

Fig.7